# EUROPÄISCHE PATENTSCHRIFT

(11) **EP 2 778 500 B1**
(45) Veröffentlichungstag und Bekanntmachung des Hinweises auf die Patenterteilung: **07.07.2021**
(21) Anmeldenummer: 13159212.3
(22) Anmeldetag: 14.03.2013
(51) Int. Cl.: F17C 5/06, F17C 7/00, F17C 13/04

(54) **Verfahren zum Betreiben einer Drucktankvorrichtung und Drucktankvorrichtung**
Method for operating a pressure tank device and pressure tank device
Procédé de fonctionnement d'un dispositif de réservoir de pression et dispositif de réservoir de pression

(43) Veröffentlichungstag der Anmeldung: 17.09.2014
(73) Patentinhaber: Magna Steyr Fahrzeugtechnik AG & Co KG, 8041 Graz (AT)
(72) Erfinder: Maurer, Johannes, 8130 Frohnleiten (AT); Stübing, Andreas, 8042 Graz (AT); Zmugg, Rudolf, 8055 Graz (AT)
(74) Vertreter: Zangger, Bernd

(56) Entgegenhaltungen:
- EP-A2- 1 722 152
- WO-A1-2009/063282

## Beschreibung

### Gebiet der Erfindung

Die vorliegende Erfindung betrifft eine Drucktankvorrichtung umfassend einen Drucktank, einen Hochdruckeingang zum Drucktank und einen Niederdruckausgang vom Drucktank und ein Verfahren zum Betreiben einer derartigen Drucktankvorrichtung. Derartige Drucktankvorrichtungen werden beispielsweise als Gashochdruckspeichersysteme zur Bereitstellung eines Kraftstoffes, wie Wasserstoff, zum Betrieb eines Kraftfahrzeuges verwendet.

### Stand der Technik

Derartige Drucktankvorrichtungen können über einen Hochdruckeingang betankt werden. Über einen Niederdruckausgang erfolgt die Entnahme des gespeicherten Mediums. Im Rahmen dieser Patentschrift wird unter dem Begriff "Hochdruckeingang" der gesamte Eingangsbereich zum Drucktank verstanden, in welchem zumindest abschnittsweise und bevorzugt überall ein hoher Druck herrscht und unter dem Begriff "Niederdruckausgang" der gesamte Ausgangsbereich vom Drucktank verstanden, in welchem zumindest abschnittsweise, nämlich stromabwärts beispielsweise eines Druckreglers, ein niedrigerer Druck herrscht. Dabei ist im Niederdruckausgang ein elektromechanisches Absperrventil mit einem Absperrventilverschlusskörper und einem Absperrventilsitz angeordnet, das dazu dient, das im Drucktank gespeicherte Medium einem Abnehmer bereitzustellen und in einem Ruhebetrieb der Drucktankvorrichtung, in welchem keine Entnahme des Mediums stattfindet, den Niederdruckausgang zu schließen. Zusätzlich zum Absperrventil können Mengenregler und/oder Druckregler im Niederdruckausgang angeordnet sein. Derartige Absperrventile nutzen in der Regel den anliegenden Druck aus dem Drucktank um den Niederdruckausgang zu verschließen, solange kein Medium aus dem Drucktank entnommen wird. Wenn es zu einem starken Druckanstieg kommt, können die Absperrventile jedoch undicht sein.

Insbesondere am Beginn eines Betankungsvorgangs derartiger Drucktanksysteme kommt es üblicherweise zu einem starken Druckanstieg sowohl im Hochdruckeingang als auch zu einem nicht erwünschten Druckanstieg im Niederdruckausgang. Ein kurzer Druckimpuls wird in der Regel am Beginn eines Betankungsvorgangs von einer Betankungsanlage abgesetzt um Eigenschaften wie die Dichtheit und das zur Verfügung stehende Tankvolumen des Drucktanks zu ermitteln. Durch diesen raschen Druckanstieg kann es zur oben erwähnten Undichtheit am Absperrventil und in weiterer Folge zu Beschädigungen am an den Niederdruckausgang angeschlossenen Abnehmer des gespeicherten Mediums kommen.

Aus der EP 1 722 152 A2 ist eine Vorrichtung bekannt, mit einem oder mehreren Speicherbehältern zur Speicherung eines unter hohem Druck stehenden Gasbrennstoffs, mit einer Verbindungseinrichtung zum Verbinden des einen oder der mehreren Behälter mit einer Hochdruck-Kraftstoffdepot-Betankungsleitung.

Die WO 2009/063282 A1 offenbart ein Wärmetauschersystem für einen Hochdruckgasspeichertank mit einem Brenngas, einer In-situ-Wärmeaustauschvorrichtung innerhalb des Tanks, einer Wärmeaustauschvorrichtung außerhalb des Tanks, mehreren Kreisläufen für den Strom des Brenngases und einem Zirkulationssteuersystem.

### Zusammenfassung der Erfindung

Es ist eine Aufgabe der Erfindung, ein Verfahren zum Betreiben einer Drucktankvorrichtung der genannten Art und eine Drucktankvorrichtung anzugeben, die Schäden der Verbraucher beim Betanken der Drucktankvorrichtung verhindern.

Die Lösung der Aufgabe erfolgt durch ein Verfahren zum Betreiben einer Drucktankvorrichtung gemäß Anspruch 1. Die Drucktankvorrichtung umfasst dabei einen Drucktank, einen Hochdruckeingang zum Drucktank und einen Niederdruckausgang vom Drucktank, wobei im Niederdruckausgang zumindest ein elektromechanisches Absperrventil mit einem Absperrventilverschlusskörper und einem Absperrventilsitz angeordnet ist, wobei zumindest am Beginn einer Betankung der Drucktankvorrichtung über den Hochdruckeingang, der Absperrventilverschlusskörper auf den Absperrventilsitz eine höhere Druckkraft aufbringt, als während einem Ruhebetrieb der Drucktankvorrichtung.

Die Lösung der Aufgabe erfolgt auch durch eine Drucktankvorrichtung gemäß Anspruch 6. Die Drucktankvorrichtung umfasst einen Drucktank, einen Hochdruckeingang zum Drucktank und einen Niederdruckausgang vom Drucktank, wobei im Niederdruckausgang zumindest ein elektromechanisches Absperrventil mit einem Absperrventilverschlusskörper und einem Absperrventilsitz angeordnet ist, wobei die Drucktankvorrichtung dazu eingerichtet ist, im Betrieb das oben genannte Verfahren auszuführen, so dass also zumindest am Beginn einer Betankung der Drucktankvorrichtung über den Hochdruckeingang, der Absperrventilverschlusskörper auf den Absperrventilsitz eine höhere Druckkraft aufbringt, als während einem Ruhebetrieb der Drucktankvorrichtung.

Der Ruhebetrieb der Drucktankvorrichtung ist ein Betrieb der Drucktankvorrichtung in welchem keine Entnahme des im Drucktank gespeicherten Mediums erfolgt (Entnahmebetrieb) und keine Betankung des Drucktanks erfolgt.

Üblicherweise ist im Ruhebetrieb einer Drucktankvorrichtung das Absperrventil geschlossen, der Absperrventilverschlusskörper sitzt daher auf dem Absperrventilsitz auf.

Erfindungsgemäß ist vorgesehen, dass zumindest am Beginn einer Betankung der Drucktankvorrichtung der Absperrventilverschlusskörper auf den Absperrventilsitz eine höhere Druckkraft aufbringt, als während dem Ruhebetrieb der Drucktankvorrichtung. Hierdurch ist sicher gestellt dass eventuelle Druckimpulse am Beginn einer Betankung nicht zu einer Undichtheit am Absperrventil führen. Die erhöhte Druckkraft muss dabei aber energiesparend nur für kurze Zeit aufgebracht werden und nicht etwa während des gesamten Ruhebetriebs der Drucktankvorrichtung aufrecht gehalten werden.

Gemäß einer Ausführungsform des erfindungsgemäßen Verfahrens kann der Absperrventilverschlusskörper auf den Absperrventilsitz während der gesamten Betankung der Drucktankvorrichtung über den Hochdruckeingang eine höhere Druckkraft aufbringen um die Dichtheit während der gesamten Betankungsdauer sicher zu stellen.

Es kann auch vorgesehen sein, dass bei jedem vorgegebenen Druckanstieg am Hochdruckeingang, also nicht nur im Zuge einer Betankung, der Absperrventilverschlusskörper auf den Absperrventilsitz eine höhere Druckkraft aufbringt, als während dem Ruhebetrieb der Drucktankvorrichtung. So kann nach Detektion eines Druckanstieges in vorgegebener Höhe stets die Dichtheit am Absperrventil sicher gestellt werden.

Erfindungsgemäß wird das Absperrventil während einem Entnahmebetrieb, also während der Entnahme von gespeichertem Medium aus dem Drucktank für einen Verbraucher, durch eine erste Magnetspule in Öffnungsrichtung aktuiert.

Gemäß einer Ausführungsform wird das Absperrventil, zum Aufbringen der höheren Druckkraft des Absperrventilverschlusskörpers auf den Absperrventilsitz, durch eine zweite Magnetspule in Schließrichtung aktuiert. Es ist also zusätzlich zu einer ersten Magnetspule, die die Öffnung des Absperrventils im Entnahmebetrieb bewirken kann, eine zweite Magnetspule vorgesehen, um eine hohe Schließkraft des Absperrventils insbesondere am Beginn einer Betankung zu erzeugen.

Gemäß einer weiteren Ausführungsform wird das Absperrventil, zum Aufbringen der höheren Druckkraft des Absperrventilverschlusskörpers auf den Absperrventilsitz, durch die erste Magnetspule in Schließrichtung aktuiert. Die erhöhte Schließkraft des Absperrventils wird also durch die selbe Magnetspule bewirkt, die zur Öffnung des Absperrventils im Entnahmebetrieb genutzt wird. Dabei bewirkt die erste Magnetspule dass der Absperrventilverschlusskörper auf den Absperrventilsitz eine höhere Druckkraft aufbringt als während dem Ruhebetrieb. Im Ruhebetrieb kann das Absperrventil über die erste Magnetspule weniger stark aktuiert sein oder auch gar nicht.

Bevorzugt wird das Absperrventil, zum Aufbringen der höheren Drucckraft des Absperrventilverschlusskörpers auf den Absperrventilsitz, durch eine Umkehr der Stromrichtung der ersten Magnetspule in Schließrichtung aktuiert, so dass das Absperrventil durch die erste Magnetspule geschlossen wird, anstatt geöffnet wie im Entnahmebetrieb. Hierdurch ist eine besonders einfache und kostengünstige Lösung zur Erhöhung der Druckkraft am Absperrventil gegeben.

Bevorzugt kann die Stärke des Stromes in der ersten und/oder der zweiten Magnetspule einstellbar sein, insbesondere durch Pulsweitenmodulations-Ansteuerung der Magnetspule.

Eine erfindungsgemäße Drucktankvorrichtung umfasst erfindungsgemäß ein Steuergerät, wobei das Steuergerät dazu eingerichtet ist, die Drucktankvorrichtung gemäß einem der oben genannten Verfahren zu betreiben. Als Steuergerät kann erfindungsgemäß jede Vorrichtung eingesetzt werden die dazu in der Lage ist, die Drucktankvorrichtung nach einem der beschriebenen Verfahren zu betreiben. Dies kann ein Steuergerät sein das einen Mikroprozessor umfasst oder auch eine einfachere elektrische Vorrichtung, beispielsweise umfassend Sensoren und Schalter. Auch könnte die Drucktankvorrichtung mechanisch betrieben sein.

Die Drucktankvorrichtung kann zur Ausführung eines erfindungsgemäßen Verfahrens beispielsweise eine erste Magnetspule umfassen, durch welche das Absperrventil während einem Entnahmebetrieb in Öffnungsrichtung aktuiert wird und zusätzlich eine zweite Magnetspule zum Aufbringen der höheren Druckkraft des Absperrventilverschlusskörpers auf den Absperrventilsitz zumindest am Beginn einer Betankung. Alternativ zur zweiten Magnetspule kann die Drucktankvorrichtung auch ein Mittel, insbesondere eine Schaltung umfassen, durch welche das Absperrventil, zum Aufbringen der höheren Druckkraft des Absperrventilverschlusskörpers auf den Absperrventilsitz, durch eine Umkehr der Stromrichtung der ersten Magnetspule in Schließrichtung aktuiert wird.

Eine erfindungsgemäße Drucktankvorrichtung kann beispielsweise in einem Kraft-, Luft-, Wasser- oder Schienenfahrzeug sowie auch in stationären Anlagen eingesetzt werden.

Weiterbildungen der Erfindung sind in den abhängigen Ansprüchen, der Beschreibung sowie den beigefügten Zeichnungen angegeben.

### Kurzbeschreibung der Zeichnungen

Die Erfindung wird im Folgenden beispielhaft unter Bezugnahme auf die Zeichnungen beschrieben.
- Fig. 1: ist eine schematische Darstellung einer erfindungsgemäßen Drucktankvorrichtung.
- Fig. 2: ist eine schematische Darstellung einer weiteren erfindungsgemäßen Drucktankvorrichtung.

### Detaillierte Beschreibung der Erfindung

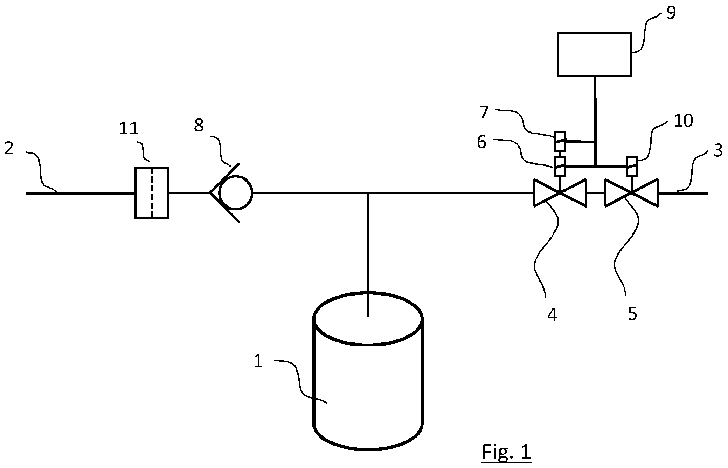

In Fig. 1 ist eine erfindungsgemäße Drucktankvorrichtung dargestellt, mit einem Drucktank 1, der über einen Hochdruckeingang 2, der ein Filter 11 und ein Rückschlagventil 8 umfassen kann, betankbar ist und mit einem Niederdruckausgang 3 zur Entnahme eines im Drucktank 1 gespeicherten Gases für einen Verbraucher. Im Niederdruckausgang 3 sind als Entnahmekomponenten ein Absperrventil 4 und ein Mengen- und / oder Druckregler 5 angeordnet.

Das Absperrventil 4 ist über eine erste Magnetspule 6 derart aktuierbar, dass das Absperrventil 4 in einem Entnahmebetrieb der Drucktankvorrichtung offen ist. In einem Ruhebetrieb ist das Absperrventil 4 geschlossen, beispielsweise durch eine stromlose Vorrichtung zur Schließung des Absperrventils wie eine Federbelastung. Durch eine zweite Magnetspule 7 kann das Absperrventil 4 während dem Beginn einer Betankung über den Hochdruckeingang 2 geschlossen werden, so dass der Absperrventilverschlusskörper des Absperrventils 4 auf den zugehörigen Absperrventilsitz eine höhere Druckkraft aufbringt, als während dem Ruhebetrieb der Drucktankvorrichtung.

Ein Mengen- und / oder Druckregler 5 im Niederdruckausgang 3 kann über eine dritte Magnetspule 10 aktuierbar sein. Alle Magnetspulen 6, 7, 10 werden über ein Steuergerät 9 angesteuert.

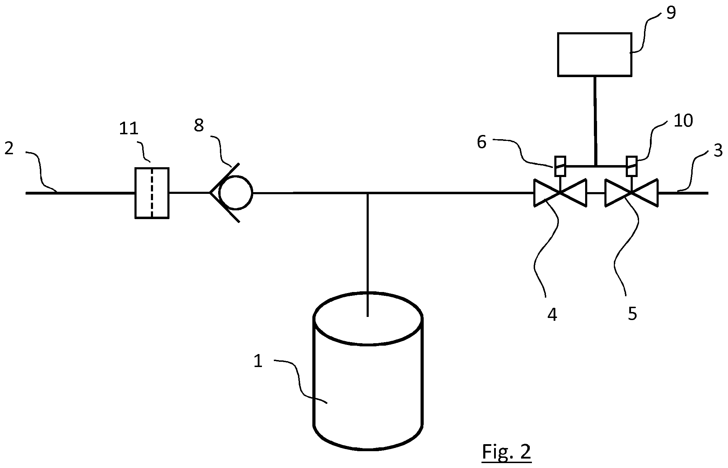

Die Drucktankvorrichtung, die in Fig. 2 dargestellt ist, unterscheidet sich von der Drucktankvorrichtung der Fig. 1 dadurch, dass zur Aktuierung des Absperrventils 4 lediglich die erste Magnetspule 6 verwendet wird. Zur Erreichung einer starken Druckkraft des Absperrventilverschlusskörpers auf den Absperrventilsitz wird die Stromrichtung in der ersten Magnetspule 6 durch das Steuergerät 9 umgekehrt.

Die Erfindung gibt somit eine Drucktankvorrichtung und ein Verfahren zum Betrieb einer Drucktankvorrichtung an, die Schäden der nachgeschalteten Verbraucher beim Betanken der Drucktankvorrichtung verhindern.

### Bezugszeichenliste

- 1: Drucktank
- 2: Hochdruckeingang
- 3: Niederdruckausgang
- 4: Absperrventil
- 5: Mengen- und / oder Druckregler
- 6: erste Magnetspule
- 7: zweite Magnetspule
- 8: Rückschlagventil
- 9: Steuergerät
- 10: dritte Magnetspule
- 11: Filter

## Patentansprüche

1. Verfahren zum Betreiben einer Drucktankvorrichtung umfassend einen Drucktank (1), einen Hochdruckeingang (2) zum Drucktank (1) und einen Niederdruckausgang (3) vom Drucktank (1), ein Steuergerät (9), wobei im Niederdruckausgang (3) zumindest ein elektromechanisches Absperrventil (4) mit einem Absperrventilverschlusskörper und einem Absperrventilsitz angeordnet ist, wobei das Absperrventil (4) während einem Entnahmebetrieb durch eine erste Magnetspule (6) in Öffnungsrichtung aktuiert wird,
**dadurch gekennzeichnet, dass**, zumindest am Beginn einer Betankung der Drucktankvorrichtung über den Hochdruckeingang (2), der Absperrventilverschlusskörper auf den Absperrventilsitz eine höhere Druckkraft aufbringt, als während einem Ruhebetrieb der Drucktankvorrichtung in welchem keine Entnahme eines Mediums aus dem Drucktank stattfindet und keine Betankung des Drucktanks erfolgt, wobei zum Aufbringen der höheren Druckkraft des Absperrventilverschlusskörpers auf den Absperrventilsitz, das Absperrventil (4) mittels Steuergerät (9) durch die erste Magnetspule (6) oder eine zweite Magnetspule (7) in Schließrichtung aktuiert wird.

2. Verfahren nach Anspruch 1,
**dadurch gekennzeichnet, dass** während der gesamten Betankung der Drucktankvorrichtung über den Hochdruckeingang (2), der Absperrventilverschlusskörper auf den Absperrventilsitz eine höhere Druckkraft aufbringt, als während einem Ruhebetrieb der Drucktankvorrichtung.

3. Verfahren nach Anspruch 1 oder 2,
**dadurch gekennzeichnet, dass** nach jeder Detektion eines Druckanstieges in vorgegebener Höhe am Hochdruckeingang (2), der Absperrventilverschlusskörper auf den Absperrventilsitz eine höhere Druckkraft aufbringt, als während einem Ruhebetrieb der Drucktankvorrichtung.

4. Verfahren nach Anspruch 1,
**dadurch gekennzeichnet, dass** das Absperrventil (4), zum Aufbringen der höheren Druckkraft des Absperrventilverschlusskörpers auf den Absperrventilsitz, durch eine Umkehr der Stromrichtung der ersten Magnetspule (6) in Schließrichtung aktuiert wird.

5. Verfahren nach zumindest einem der zuvor genannten Ansprüche, **dadurch gekennzeichnet, dass** die Stärke des elektrischen Stromes in der ersten und/oder zweiten Magnetspule (6, 7) einstellbar ist, insbesondere durch Pulsweitenmodulations-Ansteuerung der Magnetspule.

6. Drucktankvorrichtung umfassend einen Drucktank (1), einen Hochdruckeingang (2) zum Drucktank (1) und einen Niederdruckausgang (3) vom Drucktank (1), wobei im Niederdruckausgang (3) zumindest ein elektromechanisches Absperrventil (4) mit einem Absperrventilverschlusskörper und einem Absperrventilsitz angeordnet ist, wobei die Drucktankvorrichtung eine erste Magnetspule (6) umfasst, durch welche das Absperrventil (4) während einem Entnahmebetrieb in Öffnungsrichtung aktuiert wird, wobei die Drucktankvorrichtung ein Steuergerät (9) umfasst,
**dadurch gekennzeichnet, dass** das Steuergerät (9) dazu eingerichtet ist, dass, zumindest am Beginn einer Betankung der Drucktankvorrichtung über den Hochdruckeingang (2), der Absperrventilverschlusskörper auf den Absperrventilsitz eine höhere Druckkraft aufbringt, als während einem Ruhebetrieb der Drucktankvorrichtung in welchem keine Entnahme eines Mediums aus dem Drucktank stattfindet und keine Betankung des Drucktanks erfolgt, wobei zum Aufbringen der höheren Druckkraft des Absperrventilverschlusskörpers auf den Absperrventilsitz, das Absperrventil (4) mittels Steuergerät (9) durch die erste Magnetspule (6) in Schließrichtung aktuiert wird, oder das Absperrventil (4) mittels Steuergerät (9) durch eine zweite Magnetspule (7) in Schließrichtung aktuiert wird wobei die Drucktankvorrichtung die zweite Magnetspule (7) zum Aufbringen der höheren Druckkraft des Absperrventilverschlusskörpers auf den Absperrventilsitz umfasst.

7. Drucktankvorrichtung nach Anspruch 6,
**dadurch gekennzeichnet, dass** die Drucktankvorrichtung ein Mittel umfasst, durch welches das Absperrventil (4), zum Aufbringen der höheren Druckkraft des Absperrventilverschlusskörpers auf den Absperrventilsitz, durch eine Umkehr der Stromrichtung der ersten Magnetspule (6) in Schließrichtung aktuiert wird.

## Claims

1. Method for operating a pressure tank device comprising a pressure tank (1), a high-pressure inlet (2) to the pressure tank (1) and a low-pressure outlet (3) from the pressure tank (1), and a control unit (9), wherein at least one electromechanical shut-off valve (4), having a shut-off valve closure body and a shut-off valve seat, is arranged in the low-pressure outlet (3), wherein the shut-off valve (4) is actuated in an opening direction by a first magnet coil (6) during an extraction operation,
**characterized in that**, at least at the beginning of a process for filling the pressure tank device via the high-pressure inlet (2), the shut-off valve closure body applies a larger pressure force to the shut-off valve seat than during a rest operation of the pressure tank device, in which rest operation no medium is extracted from the pressure tank and the pressure tank is not filled, wherein, for the application of the larger pressure force of the shut-off valve closure body to the shut-off valve seat, the shut-off valve (4) is, by means of the control unit (9), actuated in a closing direction by the first magnet coil (6) or a second magnet coil (7).

2. Method according to Claim 1,
**characterized in that**, during the entire process for filling the pressure tank device via the high-pressure inlet (2), the shut-off valve closure body applies a larger pressure force to the shut-off valve seat than during a rest operation of the pressure tank device.

3. Method according to Claim 1 or 2,
**characterized in that**, after any detection of an increase in pressure of a predefined magnitude at the high-pressure inlet (2), the shut-off valve closure body applies a larger pressure force to the shut-off valve seat than during a rest operation of the pressure tank device.

4. Method according to Claim 1,
**characterized in that**, for the application of the larger pressure force of the shut-off valve closure body to the shut-off valve seat, the shut-off valve (4) is actuated in a closing direction by way of a reversal of the current direction of the first magnet coil (6).

5. Method according to at least one of the preceding claims,
**characterized in that** the intensity of the electric current in the first and/or second magnet coil (6, 7) can be set, in particular by way of pulse-width modulation activation of the magnet coil.

6. Pressure tank device comprising a pressure tank (1), a high-pressure inlet (2) to the pressure tank (1) and a low-pressure outlet (3) from the pressure tank (1), wherein at least one electromechanical shut-off valve (4), having a shut-off valve closure body and a shut-off valve seat, is arranged in the low-pressure outlet (3), wherein the pressure tank device comprises a first magnet coil (6), by which the shut-off valve (4) is actuated in an opening direction during an extraction operation, wherein the pressure tank device comprises a control unit (9), **characterized in that** the control unit (9) is configured so that, at least at the beginning of a process for filling the pressure tank device via the high-pressure inlet (2), the shut-off valve closure body applies a larger pressure force to the shut-off valve seat than during a rest operation of the pressure tank device, in which rest operation no medium is extracted from the pressure tank and the pressure tank is not filled, wherein, for the application of the larger pressure force of the shut-off valve closure body to the shut-off valve seat, the shut-off valve (4) is, by means of the control unit (9), actuated in a closing direction by the first magnet coil (6), or the shut-off valve (4) is, by means of the control unit (9), actuated in a closing direction by a second magnet coil (7), wherein the pressure tank device comprises the second magnet coil (7) for the application of the larger pressure force of the shut-off valve closure body to the shut-off valve seat.

7. Pressure tank device according to Claim 6,
**characterized in that** the pressure tank device comprises a means by way of which, for the application of the larger pressure force of the shut-off valve closure body to the shut-off valve seat, the shut-off valve (4) is actuated in a closing direction by way of a reversal of the current direction of the first magnet coil (6).

## Revendications

1. Procédé de fonctionnement d'un dispositif de réservoir de pression comportant un réservoir de pression (1), une entrée haute pression (2) dans le réservoir de pression (1) et une sortie basse pression (3) du réservoir de pression (1), un appareil de commande (9), au moins une soupape d'arrêt électromécanique (4) dotée d'un corps de fermeture de soupape d'arrêt et d'un siège de soupape d'arrêt étant disposée dans la sortie basse pression (3), la soupape d'arrêt (4) étant actionnée par une première bobine magnétique (6) dans le sens d'ouverture pendant un fonctionnement de prélèvement,
**caractérisé en ce qu'**au moins au début d'un remplissage du dispositif de réservoir de pression par le biais de l'entrée haute pression (2), le corps de fermeture de soupape d'arrêt applique sur le siège de soupape d'arrêt une force de pression plus élevée que pendant un fonctionnement de repos du dispositif de réservoir de pression dans lequel aucun prélèvement d'un fluide hors du réservoir de pression n'a lieu et aucun remplissage du réservoir de pression ne s'effectue, la soupape d'arrêt (4) étant actionnée dans le sens de fermeture au moyen de l'appareil de commande (9) par le biais de la première bobine magnétique (6) ou d'une deuxième bobine magnétique (7) pour l'application de la force de pression plus élevée du corps de fermeture de soupape d'arrêt sur le siège de soupape d'arrêt.

2. Procédé selon la revendication 1,
**caractérisé en ce que** pendant tout le remplissage du dispositif de réservoir de pression par le biais de l'entrée haute pression (2), le corps de fermeture de soupape d'arrêt applique sur le siège de soupape d'arrêt une force de pression plus élevée que pendant un fonctionnement de repos du dispositif de réservoir de pression.

3. Procédé selon la revendication 1 ou 2,
**caractérisé en ce qu'**après chaque détection d'une augmentation de pression de niveau prédéfini à l'entrée haute pression (2), le corps de fermeture de soupape d'arrêt applique sur le siège de soupape d'arrêt une force de pression plus élevée que pendant un fonctionnement de repos du dispositif de réservoir de pression.

4. Procédé selon la revendication 1,
**caractérisé en ce que** la soupape d'arrêt (4), pour l'application de la force de pression plus élevée du corps de fermeture de soupape d'arrêt sur le siège de soupape d'arrêt, est actionnée dans le sens de fermeture par une inversion du sens de courant de la première bobine magnétique (6).

5. Procédé selon au moins l'une des revendications précédentes,
**caractérisé en ce que** l'intensité du courant électrique dans la première et/ou la deuxième bobine magnétique (6, 7) peut être réglée, en particulier par commande par modulation d'impulsions en largeur de la bobine magnétique.

6. Dispositif de réservoir de pression comportant un réservoir de pression (1), une entrée haute pression (2) dans le réservoir de pression (1) et une sortie basse pression (3) du réservoir de pression (1), au moins une soupape d'arrêt électromécanique (4) dotée d'un corps de fermeture de soupape d'arrêt et d'un siège de soupape d'arrêt étant disposée dans la sortie basse pression (3), le dispositif de réservoir de pression comportant une première bobine magnétique (6) par laquelle la soupape d'arrêt (4) est actionnée dans le sens d'ouverture pendant un fonctionnement de prélèvement, le dispositif de réservoir de pression comportant un appareil de commande (9),
**caractérisé en ce que** l'appareil de commande (9) est conçu de manière à ce qu'au moins au début d'un remplissage du dispositif de réservoir de pression par le biais de l'entrée haute pression (2), le corps de fermeture de soupape d'arrêt applique sur le siège de soupape d'arrêt une force de pression plus élevée que pendant un fonctionnement de repos du dispositif de réservoir de pression dans lequel aucun prélèvement d'un fluide hors du réservoir de pression n'a lieu et aucun remplissage du réservoir de pression ne s'effectue, la soupape d'arrêt (4) étant actionnée dans le sens de fermeture au moyen de l'appareil de commande (9) par le biais de la première bobine magnétique (6) ou la soupape d'arrêt (4) étant actionnée dans le sens de fermeture au moyen de l'appareil de commande (9) par le biais d'une deuxième bobine magnétique (7) pour l'application de la force de pression plus élevée du corps de fermeture de soupape d'arrêt sur le siège de soupape d'arrêt, le dispositif de réservoir de pression comportant la deuxième bobine magnétique (7) pour l'application de la force de pression plus élevée du corps de fermeture de soupape d'arrêt sur le siège de soupape d'arrêt.

7. Dispositif de réservoir de pression selon la revendication 6,
**caractérisé en ce que** le dispositif de réservoir de pression comporte un moyen grâce auquel la soupape d'arrêt (4), pour l'application de la force de pression plus élevée du corps de fermeture de soupape d'arrêt sur le siège de soupape d'arrêt, est actionnée dans le sens de fermeture par une inversion du sens de courant de la première bobine magnétique (6).
